# EUROPEAN PATENT APPLICATION

(11) **EP 0 678 863 A2**
(43) Date of publication of application: **25.10.1995**
(21) Application number: 95480023.1
(22) Date of filing: 21.03.1995
(51) Int. Cl.: G11B 15/00, G11B 15/40

(54) **Bundled fiber array data storage apparatus and methods**

(30) Priority: 22.04.1994 US 231226
(71) Applicant: International Business Machines Corporation, Armonk, N.Y. 10504 (US)
(72) Inventor: Gregory, Thomas A., Rochester, Minnesota 55901 (US); Keller, Christopher G., Albany, California 94706 (US); Wall, Arthur Carl, Morgan Hill, California 95037 (US)
(74) Representative: Lattard, Nicole

(57) **Abstract**

A data storage assembly includes an array of fibers with magnetic coatings. The fibers are in an X-Y array, and individual fibers are selected by moving the array relative to fiber extracting and return assemblies. A selected fiber is pushed past a transducer for writing and/or reading data and then is returned to the array. A number of fibers equal to a data channel width, such as sixteen fibers, is accessed simultaneously in parallel. The array is made by winding a ring of fiber, making a honeycomb wall structure while winding the fiber, and then severing short segments from the ring.

## Description

### Field of the Invention

This invention relates to the storage of data and more particularly to improved data storage apparatus and methods for use with data processing systems or other data utilizing devices.

### Description of the Prior Art

In the data processing field and related environments, data is stored in many forms including magnetic, optical and electronic. Examples of data storage systems using magnetic media are magnetic disk and tape systems. Examples of optical data storage include write once read many (WORM) optical disk systems and compact disk read only memory (CDROM) systems. Examples of solid state electronic data storage are dynamic and static random access memory (DRAM and SRAM) and electronically erasable programmable read only memory (EEPROM) which may be implemented in a format referred to as flash memory.

A need has long existed for memory storage systems that are able to contain large amounts of data in a small volume or envelope of space. To meet this need effectively, a memory storage system must not only have high volumetric data density but also must be reliable, capable of being manufactured at reasonable cost and permit fast access to data that is to be sorted in or retrieved from the system. Advances have been made over the years in memory storage systems of all types, but despite many efforts, no system yet devised meets the need for small size, large data capacity, affordability, reliability and fast access.

Disk based data storage systems are widely used in computer systems. Disk systems suffer from low volumetric data density. For example, in a typical magnetic disk drive only a tiny fraction of one per cent of the volume of the device envelope consists of the magnetic material used to store data. One reason for this low volumetric data density is that in a disk system, the disk substrate must be relatively massive to provide the needed strength. In either magnetic or optical systems, although data density is improving with advancing design features, the approach inherently limits the ratio of data recording surface area to device envelope volume.

Linear magnetic data storage systems such as tape or wire based systems are able to provide relatively high volumetric data density. However, systems of this type do not permit fast access to stored data. Known single dimension recording devices employ long tapes or wires typically wound on reels. A tape or wire requires sequential accessing. Thus the average seek time required to access randomly distributed data locations is undesirably high.

Solid state electronic data storage is continually being improved from the standpoints of cost, size and speed. It is well known that a principal advantage of electronic data storage is speed. However, the cost for storage of large quantities of data is high and volumetric data density is limited because of the conductive traces required for each bit of stored data.

### Summary of the Invention

A primary object of this invention is to provide data storage apparatus and methods that make possible very high volumetric data density. Other important objects are to provide data storage in which large amounts of data can be accessed quickly; to provide data storage that is reliable; to provide data storage that is not prohibitively expensive to manufacture; and to provide data storage apparatus and methods that solve problems experienced with known apparatus and methods.

In brief, in accordance with the present invention there is provided an array of discrete side-by-side fibers having data storage capability. The array has opposed surfaces defined by ends of said fibers. Means is provided for moving the array in an X-Y plane parallel to the end surfaces. Means is provided adjacent one of the end surfaces for detecting movement of the array in the X-Y plane. Means is provided for moving a fiber in an axial direction from the array. Transducer means performs a data storage operation on the moving fiber.

In brief, in accordance with another aspect of the invention, there is provided a method for operating a data storage apparatus including an array of side by side discrete data storage fibers and a transducer cooperating with the fibers. The method comprising the steps of moving the array relative to the transducer in order to align a first end of a selected fiber with the transducer and sliding the selected fiber axially from its initial position in the array past the transducer.

### Brief Description of the Drawings

FIG. 1 is an isometric view of a bier array data storage assembly constructed in accordance with the present invention;
FIG. 2 is a cross-sectional view on an enlarged scale taken along the line 2-2 of FIG. 1;
FIG. 3 is a cross-sectional view taken along the line 3-3 of FIG. 2; FIG. 4 is a cross-sectional view taken along the line 44 of FIG. 2;
FIG. 4A is a partly schematic plan view of two permanent magnets and one drive coil of the fiber array positioning system;
FIG. 5 is an isometric view of the fiber array module of the assembly of FIG. 1;
FIG. 6 is a greatly enlarged fragmentary cross-sectional view of a small part of the fiber array of the assembly of FIG. 1, taken in a plane normal to the direction of the fibers;
FIG. 7 is a fragmentary cross-sectional view taken in a plane parallel to the fibers of the array along the line 7-7 of FIG. 6;
FIG. 8 is a greatly enlarged cross-sectional view of a small group of fibers of an array including fibers having an alternative cross-sectional shape;
FIG. 9 is a greatly enlarged cross-sectional view of a small group of fibers of an array including fibers having yet another alternative cross-sectional shape;
FIG. 10 is a cross-sectional view similar to FIG. 7 taken along a plane parallel to fibers of an array illustrating an alternative array structure;
FIG. 11 is a partly schematic and fragmentary elevational view of portions of the fiber extracting assembly, the fiber return assembly and the fiber array module illustrating components positioned in preparation for extracting a fiber from the array;
FIG. 12 is a view like FIG. 11 illustrating components with the fiber in the fully extracted position in preparation for return of the fiber to the array;
FIG. 13 is an enlarged top view of part of the fiber return assembly illustrating in schematic fashion the magnetization of the motor frame;
FIG. 14 is an enlarged, fragmentary cross sectional view taken along the line 14-14 of FIG. 13 illustrating one fiber return motor in its retracted position;
FIG. 15 is a cross sectional view taken along the line 15-15 of FIG. 14;
FIG. 16 is a greatly enlarged fragmentary view of part of FIG. 15 illustrating the fiber slide chamber and fiber pusher nose of the fiber return motor;
FIG. 17 is a greatly enlarged fragmentary bottom view of part of FIG. 3 illustrating a transducer assembly associated with the fiber return motor of FIGS. 14-16;
FIG. 18 is a cross-sectional view taken along the line 18-18 of FIG. 17;
FIG. 19 is a cross-sectional view taken along the line 19-19 of FIG. 18;
FIG. 20 is a greatly enlarged fragmentary top view of the fiber extracting assembly showing an array of optical detector modules used to determine the location of the fiber array relative to the fiber extracting and fiber return assemblies;
FIG. 21 is an enlarged, partly schematic, cross sectional view taken along the line 21-21 of FIG. 20 and also illustrating a fragment of the fiber array;
FIG. 22 is a diagrammatic and schematic illustration of operations performed in the manufacture of a fiber array in accordance with the invention;
FIG. 23 is a fragmentary sectional view of a take up spool used in the manufacture of the fiber array;
FIG. 24 is an elevational view of a fiber ring formed on and then removed from the spool of FIG. 23;
FIG. 25 is an enlarged, fragmentary view showing the process of winding fiber onto the spool of FIG. 23; and
FIG. 26 is an isometric view of a fiber segment sliced from the fiber ring of FIG. 24.

### Detailed Description of the Invention

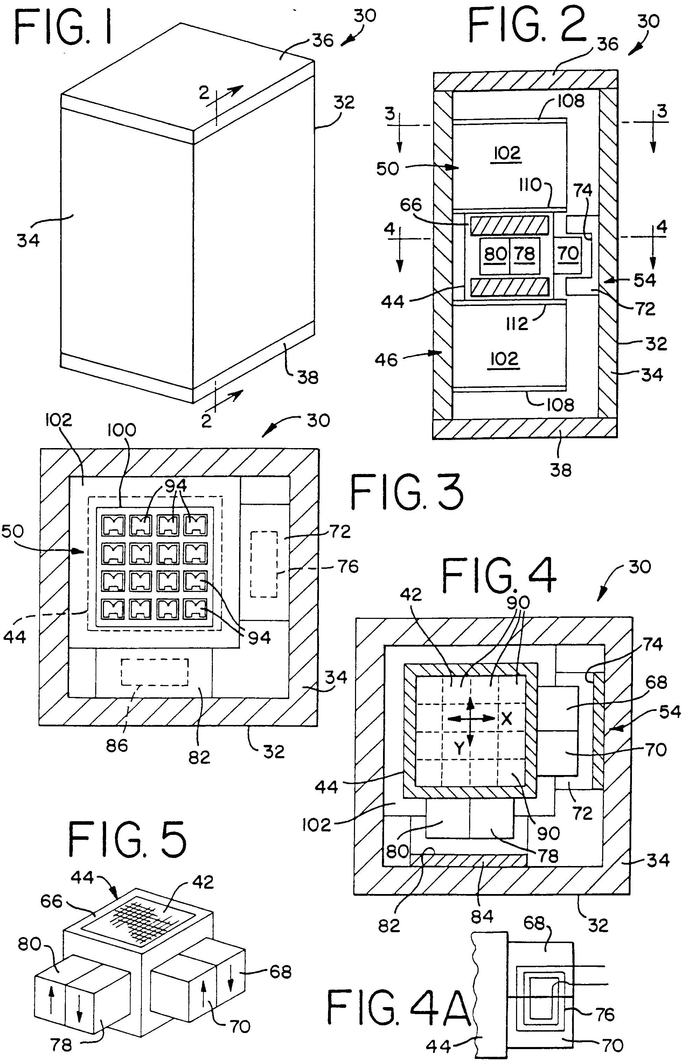

Referring now to the drawings and initially to FIGS. 1-5, there is illustrated a fiber array data storage assembly 30 constructed in accordance with the principles of the present invention. The assembly 30 is contained within a housing 32 including rectangular or square cylindrical sidewall 34 and top and bottom or end walls 36 and 38, although other housing types and configurations are possible. In the preferred embodiment of the invention, the housing is 2.5 cm. wide, 2.5 cm. deep and 5 cm. high. In this small volume of space, the assembly 30 is capable of storing as much as 185 gigabytes or more of randomly accessed data. The assembly 30 requires about 0.2 watt of power in active use, about 0.01 watt in standby mode, achieves a data transfer rate of about 94 megabits per second and a data access time of about 0.01 second.

In accordance with this invention, data is stored on fibers 40 of a fiber array 42. The term "fiber" as used in the present description means an elongated cylindrical or prismatic body having any cross-sectional shape such as polygonal, circular or other, having substantially the same cross-section throughout its effective length, and having a length at least one hundred times larger than its maximum width. Numerous fibers 40 are arranged in the array 42 and each can be accessed individually, or in parallel as part of a number of fibers, for a data transfer operation. For the purposes of the present description, the term "data transfer operation" has a generic meaning including both the writing or recording of data to fibers 40 of the array 42 and the reading or reproducing of data from fibers 40 of the array 42.

The array 42 is part of a fiber array module generally designated as 44 best seen in FIG. 5. In addition to the housing 32 and the module 44, other primary elements of the assembly 30 include a fiber extracting assembly generally designated as 46 associated with a fiber locating system 48 and a fiber return assembly generally designated as 50 associated with a data transfer system 52. The array 42 is mounted for movement between the relatively stationary assemblies 46 and 50 and systems 48 and 52. In response to position detection information provided by the fiber locating system 48, a fiber array positioning system generally designated as 54 locates the fiber array 40 relative to the extracting and return assemblies 44 and 48. One or more fibers are extracted from the array 42 by the fiber extracting assembly 46, a data storage operation is performed by the data transfer system 52 and the fiber or fibers are returned to the array 42 by the fiber return assembly 50.

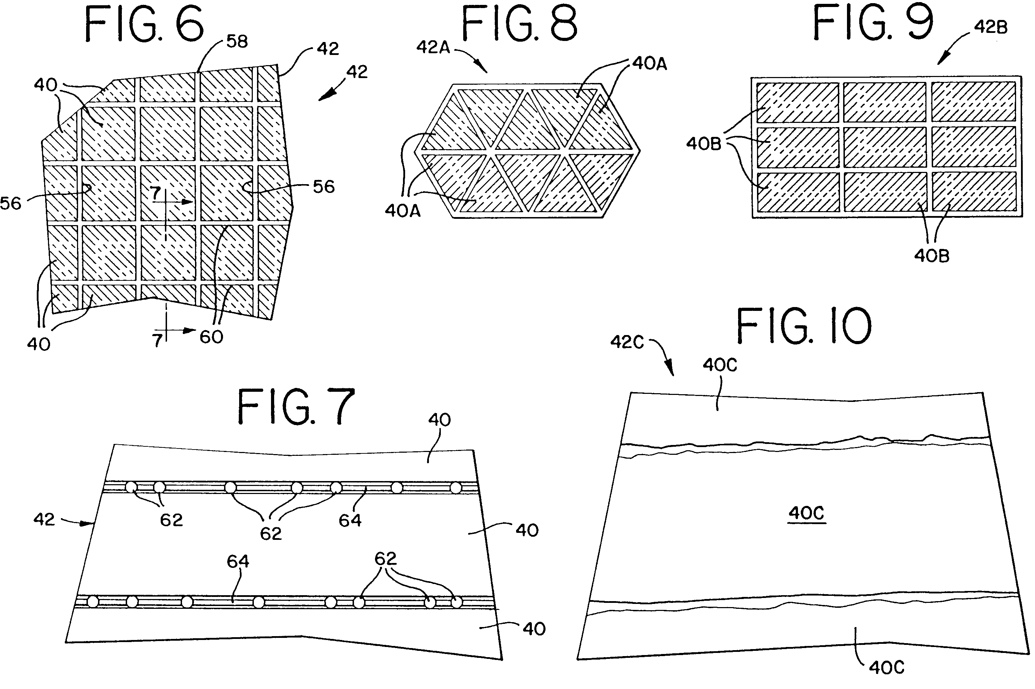

The structure of the fiber array 42 is best seen in FIGS. 6 and 7. The array 42 includes a very large number of individual fibers 40 arrayed parallel to one another, side-by-side in a bundle-like group. Each fiber 40 is slideable relative to the others so that any individual fiber 40 can be slid axially from the array for a data transfer operation. In the preferred embodiment of the invention, each fiber 40 is one centimeter long, and the fibers are arrayed in an X-Y grid pattern on two micron centers. The array 42 is a cube having sides one centimeter in length. Therefore, the volume of the array 42 is one cubic centimeter and the array includes five thousand rows and columns of data fibers 40 for a total of twenty-five million individual fibers 40.

As seen in FIG. 6 each fiber 40 is generally square in cross section. Each fiber 40 is received in an individual cell 56 of a honeycomb-like wall structure 58. Each fiber 40 can be slid axially, in the fiber direction, at least partly out of its cell 56. Every side of every fiber 40 of the array 42 is separated from its adjacent neighbor fibers 40 by walls 60 of the honeycomb structure. Each wall 60 includes spherical spacer elements 62 embedded in and projecting from both sides of a continuous solid web 64. For example, each fiber 40 may be about 1.9 micron square in cross section. The spacer elements may be about 500 angstroms in diameter, and the web 64 may be about 250 angstroms thick. The principles of the present invention can be applied to fibers of various sizes, for example fibers having widths up to about 0.025 milimeters in width.

In order to assure that each fiber 40 can move freely when it is extracted from and returned to its cell 56, a suitable lubrication system is employed. It is desired to reduce forces required for moving the fiber in order to reduce stresses to which the fiber is subjected in use. Preferably, a solid absorbate film lubricant is used, such as a ten angstrom film of tetracosanoic acid. The film may be replenished from a reservoir (not shown) within the housing 32 and the vapor pressure within the housing may be reduced to that of the lubricant. Each time that a fiber 40 is extracted from the array 42, the lubricant film is replenished. Stiction is preferably reduced by avoiding the use of liquid lubricants. The surfaces of the fibers 40 are preferably textured or roughened to have a distribution of peak heights of fifty angstroms or more in order to reduce Van der Waals forces due to intermolecular attraction.

FIGS. 8 and 9 show alternative embodiments of the invention. In FIG. 8 there are seen a few fibers 40A of an array 42A. The fibers 40A are triangular rather than square. Alternate fibers 40A are inverted to provide a compact, nested array. FIG. 9 illustrates an array 42B having rectangular fibers 40B. Depending on the data storage methods used and other factors, various fiber shapes are possible. A non-circular fiber cross-section shape has the characteristic that the fiber can be prevented from rotating when slid axially, and the orientation of the fiber is maintained during movement out of and into the array. The arrays 40A and 40B each include correspondingly shaped honeycomb structures 58A and 58B. Alternatively, circular fibers can be used with a data recording system employing a circumferential bit arrangement to avoid errors that could result from rotation of the circular fiber about its longitudinal axis.

In another alternative embodiment, it is possible to dispense with the honeycomb structure. In this case, each fiber is supported directly by contact with its immediate neighbors. The sides of the fibers surrounding an extracted fiber serve as the walls of a tube in which the extracted fiber is guided. The interfaces between a few fibers 40C of such an array 42C is seen in FIG. 10. As shown there in exaggerated fashion, the wall surfaces of each fiber 40C are textured to have fifty angstrom peak heights. Contact between adjacent fibers occurs at widely spaced asperities and continuous contact over the lengths of the fibers and resulting Van der Waals forces are avoided. A lubrication system such as described above issued. Alternatively, a liquid lubricant could be used to prevent sliding contact between fibers, and a boundary lubricant may be dissolved in the liquid lubricant to prevent wear.

The fiber array 42 is contained in a rigid frame 66 having open top and bottom surfaces. The ends of the fibers 40 are exposed at these top and bottom surfaces. The array positioning system 54 moves the fiber array 42 including the frame 66 in two dimensions ("X" and "Y", see FIG. 4) parallel to the walls 36 and 38 in the illustrated embodiment of the invention. In this way, selected individual fibers 40 of the array 42 are precisely positioned for a data storage operation relative to the fiber extracting and return assemblies 46 and 50.

For movement in the X direction, a pair of magnets 68 and 70 having opposite vertical magnetic fields are attached to one side of the frame 66. A coil housing 72 having a slot 74 receiving the magnets 68 and 70 is attached to the housing side wall 34. Current carrying coils 76 (FIGS. 3 and 4A) are embedded in the housing 72 and are selectively energized with electrical current to generate a magnetic field and a resultant motive force in the X direction applied to the magnets 68 and 70. Similarly, for movement in the Y direction, a pair of magnets 78 and 80 having opposite vertical magnetic fields are attached to the adjacent side of the frame 66. A coil housing 82 having a slot 84 receives the magnets 78 and 80 and is attached to the housing side wall 34. Current carrying coils 86 are embedded in the housing 72 and are selectively energized to current to generate a magnetic field and a motive force in the Y direction is applied to the magnets 68 and 70. Arrows in FIG. 5 indicate the direction of magnetic flux in magnets 68, 70, 78 and 80 traveling from the north to the south poles.

FIG. 4A schematically illustrates the drive coil 76 in registration with permanent magnets 68 and 70. When current flow through the coil 76, forces are generated perpendicular to the fields of magnets 68 and 70 and perpendicular to the direction of current flow. The forces generated in the two opposed legs of coil 76 parallel to the adjacent face of the array 44 are equal and opposite, and cancel one another out. Thus there is no net force in the X direction. In the alternate opposed coil legs perpendicular to the adjacent face of the array 44, forces in the Y direction are generated. Because the current in the two legs travels in opposed directions through magnetic fields of two opposite polarities, forces are generated in the same direction along the Y axis. These forces add and the result is a force that moves the magnets 68 and 70 and the array 44 in the Y direction. Reversal of the direction of current flow reverses the direction of the Y axis force. The coil 86 cooperates in a similar way with the magnets 78 and 80 to generate forces that move the array 44 in the X direction. A suitable control circuit is connected to the coils to effect the desired motion of the array 44.

When the fiber array has been moved to locate selected fiber or fibers in position relative to the extracting and return assemblies 46 and 50, the selected fiber or fibers are extracted from the array 42, a data storage operation is performed, and the fiber or fibers are returned to the array. In the preferred embodiment of the invention, sixteen individual fibers 40 are accessed simultaneously and in parallel. This has the advantage of increasing data throughput and providing compatibility with a sixteen bit wide data channel. It would be possible to access single fibers or a different number of fibers simultaneously if desired to suit the needs of any particular data processing or data utilization system.

As indicated by dotted lines in FIG. 4, the array 42 is subdivided into sixteen (four in the X direction and four in the Y direction) similar and individually accessed fiber groups 90. In the preferred embodiment of the invention, each group 90 is 0.250 cm. by 0.250 cm. square and includes 1,562,500 fibers 40 in an X-Y array of 1,250 by 1,250 fibers.

Fibers 40 are moved to and from the array 42 by the fiber extracting and return assemblies 46 and 50. In order to permit sixteen simultaneous data transfer operations to be performed upon individual fibers 40 from the fiber groups 90, the extracting assembly 46 includes an array of sixteen fiber drive motors 92 and the return assembly 50 includes a similar array of sixteen fiber drive motors 94. The motors 92 and 94 are aligned with one another and are arrayed like the groups 90. There is one motor 92 for each group 90 in the assembly 46 and one motor 94 for each group 90 in the assembly 50. All of the motors 92 of the assembly 46 are operated in unison and all of the motors 94 of the assembly 50 are operated in unison.

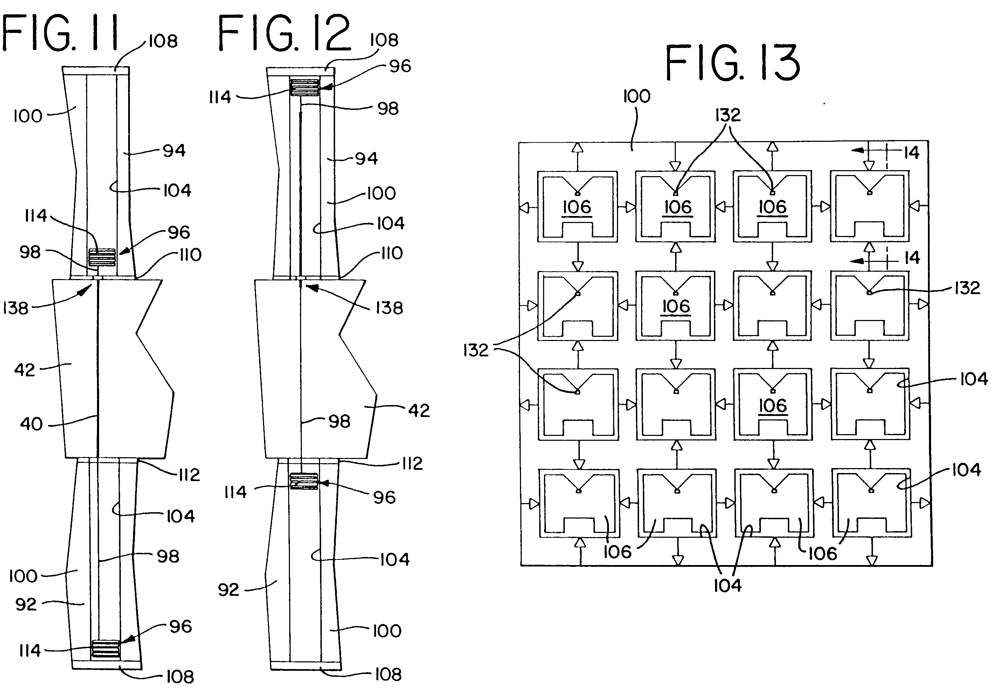

The operation of one pair of fiber drive motors 92 and 94 is shown schematically in FIGS. 11 and 12. In FIG. 11 a data fiber 40 of the array 42 is aligned with and between the motors 92 and 94 and is in its normal home position in the array 42. Each motor 92 and 94 includes a piston assembly 96 movable in a "Z" direction perpendicular to the X and the Y directions in which the array 42 is moved. The Z direction is the direction in which the data fibers 40 are axially aligned. Each piston assembly 96 includes a pushing fiber 98 guided for movement in the Z direction. The pushing fiber 98 of the motor 92 is relatively long, similar in length to the data fiber 40, while the pushing fiber 98 of the motor 94 is relatively short.

To extract fiber 40 from its home position in the array, the motor 92 is energized. Its pushing fiber 908 contacts the end of fiber 40 and pushes it axially from the array. Motor 94 is energized to pull its pushing fiber 98 away from the moving data fiber 40 so that motor 94 does not apply forces to fiber 40 in opposition to the pushing forces applied by motor 92. As fiber 40 leaves its home position in the array 42, its position is taken by the pushing fiber 98 of motor 42. The pushing fibers 98 have a cross sectional shape similar to or slightly smaller than the cross sectional shape of data fibers 40. The pushing ends of fibers 98 can be beveled, tapered or pointed so that they can easily enter into a cell 56 and engage a fiber 40 even if somewhat misaligned.

The fully extracted position of fiber 40 is seen in FIG. 12. Preferably, the fiber 40 is not removed entirely from the array and its trailing end remains in the corresponding cell 56. This facilitates return of the fiber 40 to its home position because realignment of the fiber 40 in the array 42 is not necessary. To return the fiber 40 to its home position in the array, motor 94 is energized to push the fiber 40 in the reverse direction axially back into the array, while the motor 92 is energized to retract its pushing fiber away from the returning fiber 40. Retracting the pushing fiber 98 of the non-pushing motor 92 or 94 minimizes the stresses applied to the data fiber 40. The array 42 is constructed and lubricated so as to reduce forces other than axial forces on the fiber 40 to a minimal, negligible level. During its movement in the Z direction the fiber 40 traverses the data transfer system 52 and a data transfer operation is performed. When the fiber 40 is returned fully to is home position of FIG. 11, the pushing fibers 98 are clear of the array 42, and the array module 44 can be repositioned to align a different fiber 40 with motors 92 and 94.

The structure of motors 94 is shown in detail in FIGS. 13-16. Motors 92 have the same construction as motors 94 and are inverted. Motors 94 all share a common stator frame 100 mounted in an outer support frame 102 (FIG. 3). As seen in FIG. 13, the stator frame 100 defines an array of sixteen cylinders 104. One of the piston assemblies 96 is movable in each cylinder 104. Various types of motors could be used for Z direction movement of the data fibers 40, including fluid and electrical powered motors of different types.

In the preferred arrangement the frame 100 is made of a material such as nickel plated samarium cobalt and is magnetized in the manner shown by arrows in FIG. 13. The arrows indicate magnetic flux oriented in the direction of the arrows traveling from the south poles to the north poles. Within each cylinder 104 a stationary guide column 106 is supported. The column 106 of motors 94 are suspended between an outer cover 108 and the plate like support 110 for the data transfer system 52. In the case of motors 92, the columns 106 extend between an outer cover 108 and a plate like support 112 for the fiber locating system 48. A continuous, somewhat rectangular, cylindrical sleeve-like slideway is defined within each cylinder 104 around each column 106.

Each piston assembly includes a coil 114 wound upon a coil frame 116. The columns 106 are made of a high permeability, low coercivity material such as permalloy to concentrate flux travel across the coil 114. A flat flexible cable 118 is connected to the coil 114 and extends out of the fiber return assembly 50. The column 106 includes an axially extending recess 120 in which the cable 118 is received and is free to flex as the piston assembly moves between its extreme positions. Electrical current introduced to the coil 114 with the cable 118 results in a motive force that moves the piston assembly 96 in the Z direction, in a direction and at a speed determined by the direction and magnitude of current flow.

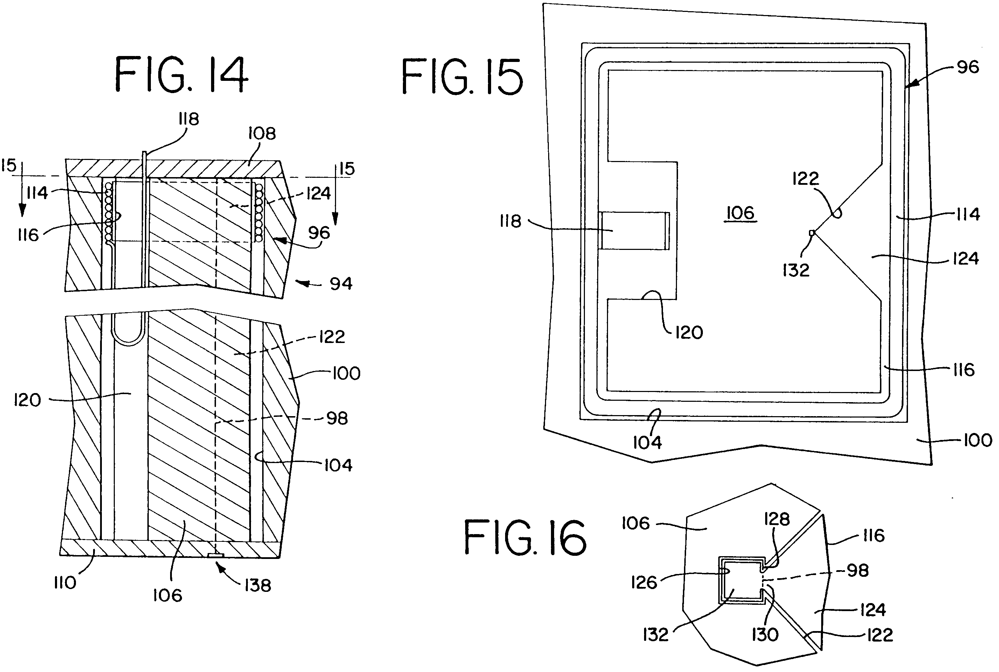

Column 106 includes a generally V-shaped axially extending groove 122 opposite the recess 120. The coil frame 116 includes a complimentary shaped, inwardly extending projection 124 received in the groove 122. As seen in FIG. 16, the column 106 defines a continuous fiber slide chamber 126 communicating with the apex of the V-groove 122 through a restricted slot 128. The projection 124 terminates in a reduced throat 130 extending through the slot 128 and a drive nose 132 captured in the fiber slide chamber 126. The upper end of the pusher fiber 98 abuts the drive nose 132. Preferably the fiber end is secured to the nose 132 so that the motor 94 can both push and pull the fiber 98. The fiber 98 and, when present, a data fiber 40 is trapped in the slide chamber 126 because the slot 128 is narrower than the fibers. The chamber 126 is slightly larger than the data fibers 40 to assure free sliding motion of the fibers. Because the fiber path is defined within the high permeability column 106, a data fiber present in the chamber 126 is shielded from the magnetic field of the motor 94 to attenuate any effect on data stored upon the fiber 40.

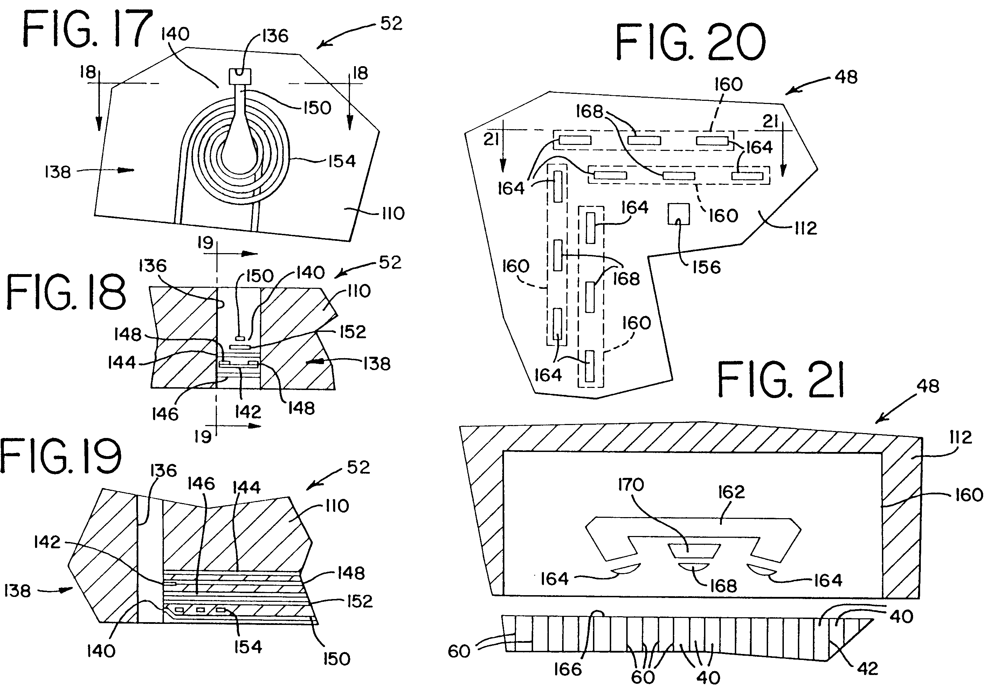

The support 110 for the data transfer system 52 includes sixteen apertures 136 aligned with the sixteen fiber slide chambers 126. A transducer assembly 138 is located near each aperture 136. One transducer assembly 138 is illustrated in FIGS. 18-19. Various data writing and/or reading systems may be employed depending upon the requirements of the data storage assembly 30. For example, the system could use read only techniques for data reproduction only, or optical or magnetic or other technology could be employed. The preferred arrangement uses a magnetic data storage system wherein data is written to or recorded on data fibers 40 with an inductive head 140 and wherein data is read or reproduced from data fibers 40 with a magneto resistive head 142.

Heads 140 and 142 are carried by the support 110 and are located at one side of the corresponding fiber aperture 136. With known techniques used in the manufacture of disk file read/write heads, the transducer assembly 138 is made of deposited conductive layers including a pair of shield layers 144 and 146 flanking a pair of conductors 148 connected to the magneto resistive head 142. The inductive head 140 is defined at the gap between first and second pole tips 150 and 152 coupled to a coil 154.

Data may be written to or read from data fiber 40 as it moves through the aperture 136. The data storage operation can take place during fiber extraction or fiber return or both. In the preferred embodiment of the invention, the motors 92 and 94 move the data fibers past the transducer assemblies 138 at a linear velocity of one meter per second. The data fibers have a linear data density of 150 kilobits per inch (kbpi) with a corresponding bit length of 0.169 micron. Each fiber is defined as one data sector having a capacity of 7.4 kilobytes. The data capacity of the data storage assembly is about 185 gigabytes. When sixteen fibers are accessed in parallel, the data storage rate for either reading or writing is 94 megabits per second.

The support 112 for the fiber locating system 48 includes sixteen fiber apertures 156. Each is aligned with one of the fiber slide chambers 126 of the fiber extracting motors 92 of the fiber extracting assembly 46. The chambers 126 of motors 94 and the apertures 136 of the data transfer system 52 are aligned with the chambers 126 of motors 92 and the apertures 156 of the fiber locating system 48. As a result, when a selected data fiber is aligned with one aperture 156, the opposite end of the same fiber is aligned with the corresponding aperture 136.

The position of the individual fibers 40 of the array 42 is detected by the fiber locating system 48. This information is used to control the array positioning system 54 in order to move sixteen individual data fibers 40, one from each of the fiber groups 90, into registration with the sixteen apertures 136 and the sixteen apertures 156. The position of the array may be detected by various suitable devices such as mechanical sensors, optical fiber close proximity sensors and others. It is preferred to use optical detector modules.

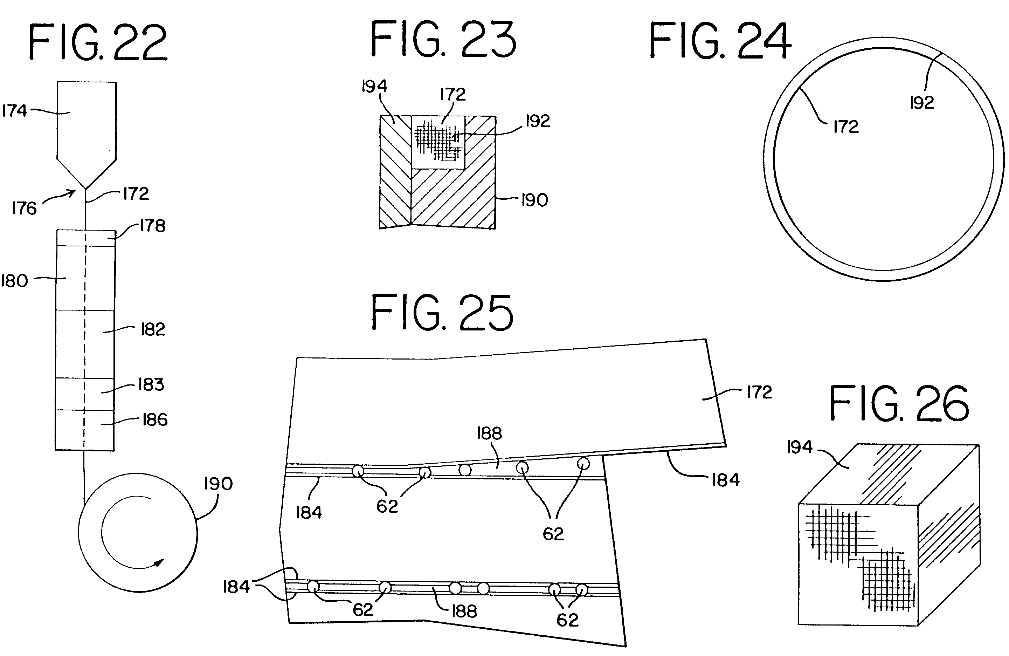

The fiber locating system 48 is illustrated in FIGS. 20 and 21. At any suitable location in the support 112, a desired number of optical detector modules 160 are embedded in the surface facing the array 42. For accuracy and redundancy, the system 48 of the preferred embodiment includes four modules 160, two for detecting fiber movement in the X direction and two for detecting fiber movement in the Y direction.

Each module 160 includes a generally U-shaped laser diode 162 directing optical energy through projecting microlenses 164 onto the fiber end face 166 of the array 42. Reflected optical energy is focused by a receptor microlens 168 onto a photodiode 170. Because the walls 60 and/or fiber edges of the face 166 differ significantly in reflectivity from the main portions of the ends of the fibers 40, the photodiodes 170 provide signals that vary significantly as the array 42 moves across the modules 160. Movement of the array is begun at a known home position determined by fixed stops or the like, and the information included in signals from the photodiodes 170 establishes the array position with sufficient accuracy to position sixteen desired fibers in registration with the apertures 136 and 156. A further description of the modules 160 beyond that required for a complete understanding of the present invention may be found in Sawada et al., Fabrication of Active Integrated Optical Micro-Encoder, IEEE Proceedings, Micro Electro Mechanical Systems, Nara, Japan, 30 January-2 February, 1991, incorporated herein by reference.

FIGS. 22-26 illustrate a method for making the fiber array 42. A continuous length 172 of glass fiber is pulled from a rod 174 to which heat is applied in a conventional glass pulling operation. The fiber 172 passes through a fiber dimension control sensor 178 to a coating station 180 where a magnetic film is applied to the fiber by sputtering or other process. In a second coating station 182 a carbon overcoating is deposited onto the fiber 172 on top of the magnetic layer.

In an application station 183, the coated and overcoated fiber 172 is covered with a layer 184 of wax or similar material capable of subsequent removal with heat or the like. Then, in a final application station 186, the wax is covered with a slurry 188 of resin and spacer particles 62. When the continuous fiber 172 leaves the station 186, it wound under tension onto a take up spool 190.

The effect of tension of the fiber 176 at take up spool 190 is illustrated in FIG. 25. The fiber 172 is wound in successive layers of side by side wraps. As the top fiber is forced by tension against its neighbors beneath and to the side, the spacer particles 62 project through the wax layer 184 and against the walls of the fiber. Thus, the particles 62 establish the spacing between adjacent fibers. Preferably the particles 52 are alumina particles having a consistent maximum diameter of 0.1 micron. The concentration of particles 62 in the slurry 188 is low enough to assure that more than one layer of particles cannot be present between adjacent fiber walls. Preferably the wax layer 184 has a thickness of 50 angstroms. Another result of the fiber tension is that the resin of the slurry 188 is forced out from between the wax layers 184, leaving a resin thickness equal to the space between wax layers and equal to the diameter of particles 62 minus two wax layers.

The fiber preparation and winding operations continue until the take up spool 190 is filled with one ring 192 of wound fiber. One flange 194 of the spool 190 is removable permitting the ring 192 to be removed. The ring, seen in FIG. 24, preferably has a diameter that is very large compared to the length of each data fiber 40, for example a diameter of one meter.

Either while remaining on the spool 190 or after removal if preferred, the resin of slurry 188 is cured to form the relatively rigid walls 60 of the fiber honeycomb structure 58, and the wax layers 184 are removed to leave empty space between the walls 60 and the fiber surfaces as seen in FIG. 7. If materials such as a thermal setting resin and wax are used, these functions can be achieved by heating the ring 192. Preferably the resin is an epoxy capable of forming a rigid cross linked honeycomb wall structure.

After the ring 192 is completed, it is sliced in the radial direction into segments 194 each having the same length as the length of the data fibers 40 that are separated in this slicing operation. Because the data fiber length, for example one centimeter, is far shorter than the ring diameter, for example one meter, the curvature of the segment 194 and the curvature of each data fiber 40 is so small as to have no significant effect. The crown of each data fiber 40 is only about 25 microns, and may be decreased if desired by increasing the diameter of the ring 192.

If desired, the support frame 66 of the array 42 may be formed in the spool around the ring 192. Alternatively, the array may be placed into the support 66 after forming the ring or after severing the segment 194. The segment 194 may consist of an entire array 42 if desired or may consist of a smaller subdivision of the array such as one fiber group 90. In this case, all of the groups 90 are preferably sliced from the same half of a ring 192 and a consistent orientation is maintained. During winding, the fiber 172 drifts laterally by one diameter with each turn. By making an entire array 42 from contiguous similarly oriented segments, differences in fiber position among different groups 90 is minimized.

In operation of the data storage assembly 30, a central processing unit or other data controlling device is employed in conventional fashion to store addresses of data and data sectors in the array 42. The array 42 is addressed by sixteen parallel sectors consisting of sixteen individual fibers, one from each group 90. Signals are provided to coils 76 and 86 to operate the array positioning system 54. The array position is detected by the fiber locating system 48 for feedback control enabling selected fibers 40 to be aligned in registration with the apertures 136 and 156. Then the selected fibers are extracted by the motors 92 and returned by the motors 94. During one or both of these movements, a data storage operation is performed by the transducer assemblies 138 of the data transfer system 52. Suitable cabling (not shown except for cable 118) is used for communicating signals to and/or from the coils 76 and 68, the coils 114, the modules 160 and the transducer assemblies 138.

## Claims

1. A data storage assembly comprising:
an array of discrete side-by-side fibers having data storage capability, said array having opposed surfaces defined by ends of said fibers;
array moving means for moving said array in an X-Y plane parallel to said surfaces;
position detecting means adjacent one of said surfaces for detecting movement of said array in said X-Y plane;
fiber transport means for moving a fiber in an axial direction from said array; and
transducer means for performing a data storage operation on the moving fiber.

2. A data storage assembly as claimed in claim 1, said fiber having a polygonal cross section, which is rectangular, square or triangular to prevent rotation.

3. A data storage assembly as claimed in claim 1 or 2, said fiber transporting means including a plurality of fiber pushing motors for moving a plurality of fibers simultaneously, and a plurality of said transducer means for performing parallel data storage operations on said moving fibers.

4. A data storage assembly as claimed in claim 1, 2 or 3, said array including a honeycomb wall structure with walls separating adjacent fibers.

5. A data storage assembly as claimed in any one of claim 1 to 4, said array including fibers with adjacent walls in sliding contact with one another.

6. A data storage assembly as claimed in any one of claim 1 to 5, said array moving means comprising magnet means secured to said array and coil means in the flux path of said magnet means.

7. A data storage assembly as claimed in any one of claim 1 to 6, said position detecting means including an optical detector module having a laser and a photodetector.

8. A data storage assembly as claimed in any one of claim 1 to 7, said fiber transport means including motor means having a pushing fiber engageable with an end of a selected fiber of said array.

9. A data storage assembly as claimed in any one of claim 8, said motor means including a cylinder and a piston in said cylinder, said pushing fiber being connected to said piston, and said piston including a coil.

10. A method for operating a data storage system including an array of side by side discrete data storage fibers and a transducer cooperating with the fibers, said method comprising the steps of:
moving the array relative to the transducer in order to align a first end of a selected fiber with the transducer; and
sliding the selected fiber axially from its initial position in the array past the transducer.

11. he method of claim 10 wherein said sliding step includes pushing on the first end of the selected fiber.

12. The method of claim 10 wherein said sliding step includes pushing a pusher fiber against an end of the data fiber and into the array in place of the data fiber.

13. The method of claim 10 further comprising supporting the side wall of the fiber during said pushing step to prevent buckling.

14. The method of claim 13 wherein said supporting step includes surrounding the side wall of the fiber with adjacent fibers in the array, and wall portions of a honeycomb support structure.

15. The method of claim 14 wherein said supporting step further includes guiding the portion of the fiber that moves beyond the transducer.

16. The method of claim 10 further comprising reinserting the selected fiber into the array after the pushing step, and transferring data between said transducer and the selected fiber during the reinserting step, or the pushing step.

17. The method of claim 16 wherein said pushing step includes stopping the fiber before the first end is out of the array in order to maintain alignment of the selected fiber with its original position.

18. A data storage system comprising:
a plurality of discrete fibers arranged into an array;
different data stored on different ones of a plurality of said fibers;
a transducer; and
moving means for moving a fiber from the array relative to said transducer while other fibers of the array remain stationary.

19. The data storage system according to claim 18 wherein each fiber has a data storage area, said system comprising:
a support and means carried by said support for holding said fibers in the array; said transducer being carried by said support for interacting with said data storage area of said fibers; and
said moving means comprising drive means movable relative to said array for selecting a fiber of the array, for moving the selected fiber from its position in the array and for moving the selected fiber relative to said transducer.

20. The data storage apparatus according to claim 18 wherein
the plurality of discrete fibers arranged side by side in an array, forms a bundle one end of said bundle comprising a plane containing first ends of said fibers, the transducer being disposed adjacent the other end of said bundle;
the moving means moving said bundle relative to said transducer and aligning a second end of a selected fiber with said transducer; and said system further comprising:
pusher means adjacent said one end of the bundle for pushing on the first end of the selected fiber to move the fiber axially out from said bundle toward said transducer.
